# EUROPÄISCHE PATENTANMELDUNG

(11) **EP 1 782 932 A2**
(43) Veröffentlichungstag der Anmeldung: **09.05.2007**
(21) Anmeldenummer: 06021306.3
(22) Anmeldetag: 11.10.2006
(51) Int. Cl.: B27N 1/02

(54) **Verfahren zur Herstellung von mit wenigstens einem Thermoplast umhüllten Holzteilchen und nach diesem Verfahren hergestellte Mischung**

(30) Priorität: 02.11.2005 DE 102005052770
(71) Anmelder: Reimelt Henschel MischSysteme GmbH, 34127 Kassel (DE)
(72) Erfinder: Schär Ulrich, 33106 Paderborn (DE); Korte Hans Dr., 23966 Wismar (DE)
(74) Vertreter: Freiherr von Schorlemer, Reinfried

(57) **Zusammenfassung**

Es wird ein Verfahren zur Herstellung von mit wenigstens einem Thermoplast umhüllten Holzteilchen durch Mischen in einem Mischer (1) beschrieben. Erfindungsgemäß werden dem Mischer (1) als Holzteilchen aus Holzspänen hergestellte Presskörper (4) zugeführt. Die Presskörper (4) werden während des Mischvorgangs unter Zurückbildung der Späne wieder aufgelöst (einzige Figur).

## Beschreibung

Die Erfindung betrifft ein Verfahren nach dem Oberbegriff des Anspruchs 1 sowie eine Mischung nach dem Oberbegriff des Anspruchs 12.

Es ist seit längerer Zeit bekannt, aus Holz-Abfallprodukten erhaltene Holzteilchen mit Thermoplasten als Bindemittel zu vermischen und das Gemisch dann in Kunststoff-Verarbeitungsmaschinen wie z. B. Extrudern oder Spritzgussmaschinen zu Profilen, Platten od. dgl. zu verarbeiten, die ein dem Holz ähnliches Aussehen haben. Voraussetzungen für ein gutes Endprodukt sind dabei eine homogene Vermischung aller Bestandteile und eine möglichst einheitliche Teilchengröße.

Bei einem bekannten Verfahren dieser Art (EP 0 667 375 B1) wird feines Sägemehl, das aus zerkleinerten Holzteilchen mit einem mittleren Partikeldurchmesser von 780 µm oder weniger besteht, als Ausgangsmaterial verwendet. Die Holzteilchen werden in einem Mischer mit wenigstens einem Thermoplast wie z. B. Polyvinylchlorid, Polyester oder Polypropylen od. dgl. vermischt, das ebenfalls in fein zerteiltem Zustand vorliegt. Die notwendige Trocknung des meistens feuchten Sägemehls erfolgt dabei durch Reibungswärme und dadurch, dass das Sägemehl vor der Zugabe des Thermoplasts eine ausreichende Zeitlang intensiv gemischt wird. Die Erwärmung der Holzteilchen bringt außerdem den Vorteil mit sich, dass die entstehende Wärme ausreicht, um das nach dem Trocknen zugeführte Thermoplast zu plastifizieren bzw. zu schmelzen. Nach der Plastifizierung des Thermoplasts und der damit verbundenen Beschichtung bzw. Umhüllung der einzelnen Holzteilchen mit dem Thermoplast wird das erhaltene Gemisch abgekühlt, wozu es z. B. in einen an eine Austragsöffnung des Mischers angeschlossenen Kühlmischer überführt wird. Um die aufgrund der Klebrigkeit des Thermoplasts unvermeidbare Klumpenbildung (Agglomerierung) der beschichteten Holzteilchen in Grenzen zu halten, werden die Betriebsbedingungen im Kühlmischer so gewählt, dass die fertigen Teilchen einen mittleren Durchmesser von 10 mm oder weniger aufweisen.

Weiterhin ist es bekannt (DE 198 60 836 C1), ein aus überwiegend kleinteiligen Holzteilchen bestehendes Material in einem Extruder mit dem Thermoplast zu umhüllen. Zu diesem Zweck werden die Holzteilchen in einem ersten Extruderabschnitt zunächst erhitzt und getrocknet und danach in einem zweiten Extruderabschnitt mit dem Thermoplast beschichtet. Dabei werden die Holzteilchen in loser Form oder in Form von vorverdichteten Presslingen in den Extruder eingeführt. Über die Beschaffenheit der Presslinge sind dabei keine Angaben gemacht. Am Ausgang des Extruders wird die Mischung durch ein Formwerkzeug gepresst, um beispielsweise einen stabförmigen Gegenstand herzustellen.

Bei einem anderen bekannten Verfahren (US 5 746 958) werden Holzteilchen in Form von Sägemehl, Holzspänen od. dgl. zunächst in einer Mühle auf einen Partikeldurchmesser von weniger als 600 *µ*m zerkleinert. Daran anschließend werden die Holzteilchen und die Thermoplastteilchen in einem vorgewählten Gewichtsverhältnis zusammengeführt und dann einer Pelletiervorrichtung zugeführt, um sie in Pellets mit einem hohen Schüttgewicht zu überführen. Die dadurch entstehende Prozesswärme dient gleichzeitig der Trocknung der aus Holzteilchen und Thermoplasten bestehenden Mischung. Die erhaltenen Pellets werden schließlich als Ausgangsmaterial für einen Extruder verwendet und in diesem zu einem stabförmigen Endprodukt geformt.

Bei den beschriebenen Verfahren werden als Ausgangsmaterialien grundsätzlich Holzteilchen verwendet, die bereits sehr fein zerkleinert sind oder vor dem Vermischen mit dem Thermoplast in einem Mahlwerkzeug od. dgl. in einen fein zerteilten Zustand gebracht werden. Die fertige Mischung aus Holzteilchen und Thermoplast enthält daher entsprechend feine und sehr kurze Fasern. Dadurch ergibt sich zwar der Vorteil, dass das Gemisch ein vergleichsweise hohes Raum- bzw. Schüttgewicht von z. B. 100 g/l bis 500 g/l besitzt und daher sowohl in einem Extruder als auch in einer Spritzgussmaschine wirtschaftlich verarbeitet werden kann. Nachteilig ist jedoch, dass die Faserlängen der Holzteilchen für zahlreiche Produkte, die aus derartigen Gemischen hergestellt werden können, zu klein sind. Insbesondere zur Herstellung von Produkten, an die hohe mechanische Anforderungen gestellt werden, sind wesentlich langfaserige Holzteilchen in der Mischung von bis zu 10 mm erwünscht, was die Anwendung von längeren Holzspänen als Ausgangsmaterial voraussetzt. Die Verarbeitung von 5 mm bis 50 mm langen Holzspänen ist bisher jedoch nicht oder zumindest nicht unter wirtschaftlichen Gesichtspunkten möglich. Ein Hauptgrund hierfür ist vor allem die Tatsache, dass derart große Späne, z. B. Hobelspäne, ein sehr kleines Schüttgewicht von ca. 30 g/l bis 60 g/l haben, sich leicht in einander verhaken, kaum rieselfähig sind und daher nur in so kleinen Mengen in einen Mischer od. dgl. gegeben werden können, dass dieser nicht wirtschaftlich betrieben werden kann. Das trifft insbesondere auch für ein bekanntes Verfahren (DE 22 45 871 A1) zu, bei dem Holzteilchen mit einer Teilchengröße von 0,02 mm bis 10 mm zusammen mit entsprechend großen Thermoplastteilchen in einem Extruder zu Fußleisten od. dgl. verarbeitet werden.

Ausgehend von diesem Stand der Technik besteht das technische Problem der vorliegenden Erfindung darin, das Verfahren der eingangs bezeichneten Gattung so auszubilden, dass es vor allem zur Verarbeitung von Holzspänen mit großen Längen geeignet ist, insbesondere z. B. von Hobelspänen, wie sie in Holzhobelmaschinen anfallen. Außerdem soll eine Holz/Thermoplast-Mischung vorgeschlagen werden, die aus derartigen Holzspänen hergestellt ist.

Die Lösung dieses Problems gelingt erfindungsgemäß mit den Merkmalen der Ansprüche 1 und 12.

Die Erfindung überwindet durch das Einbringen von stark verdichteten, trockenen Holzspänen in den Mischer die beschriebenen Nachteile des sich Verhakens, der mangelnden Rieselfähigkeit und des niedrigen Schüttgewichts. Daher kann der Mischer stets mit wirtschaftlich sinnvollen Mengen an Holzspänen beschickt werden. Gleichzeitig wird der Vorteil erzielt, dass die zugeführten Holzspäne zwar durch die Mischwerkzeuge in Fasern, Schuppen und kleinere Partikel aufgeteilt werden, die in der fertigen Mischung erhaltenen Holzteilchen aber wesentlich größer sind, als dies bei der Anwendung der bekannten Verfahren gilt. Vorteilhaft ist schließlich auch, dass verdichtete Holzspäne gewöhnlich wesentlich trockener als frische, aus Stammholz erzeugte Sägespäne od. dgl. sind, was kurze Trocknungszeiten ermöglicht.

Weitere vorteilhafte Merkmale der Erfindung ergeben sich aus den Unteransprüchen.

Die Erfindung wird nachfolgend anhand eines bevorzugten Ausführungsbeispiels näher erläutert, das in der einzigen beigefügten Zeichnung schematisch dargestellt ist.

Als Ausgangsmaterial für das erfindungsgemäße Verfahren werden Holzteilchen in Form von Holzspänen, insbesondere Hobelspänen verwendet, die vorzugsweise eine Dicke von 0,05 mm bis 0,5 mm, eine Breite von 5 mm bis 20 mm und eine Länge von 5 mm bis 50 mm aufweisen. Hobelspäne dieser Art werden z. B. als Nebenprodukte in Hobelwerken erhalten. Erfindungsgemäß werden die Holzspäne zunächst mit üblichen Ballenpressen, Brikettier- oder Pelletiermaschinen auf ein hohes Schüttgewicht von z. B. 300 g/l verdichtet und gleichzeitig zu Ballen, Briketts, Pellets oder sonstigen Presskörpern geformt. Dabei wird dem Ballen z. B. eine Größe von 800 mm - 500 mm - 300 mm bei einem Gewicht von 30 kg bis 35 kg gegeben, was einer Dichte von ca. 250 g/l bis 300 g/l entspricht. Holzbriketts werden demgegenüber z.B. mit einer Länge von 230 mm und einem Durchmesser von 77 mm bei einem Gewicht von ca. 1,2 kg pro Stück hergestellt, was im Vergleich zu den Ballen einer noch größeren Dichte von ca. 1,1 kg/l entspricht. Pellets werden schließlich derart hergestellt, dass sie eine Länge von 20 mm bis 50 mm bei einem Durchmesser von ca. 4 mm bis 10 mm, eine Dichte von ca. 1,1 kg/l, ein Schüttgewicht von ca. 650 kg/m³ und daher ein kleineres Stückgewicht als die Briketts haben.

Im Fall der Herstellung von Ballen und ggf. auch von Briketts kann es zweckmäßig sein, die Presskörper in eine vorzugsweise aus Kunststoff bestehende Folie einzuschweißen, die mit der herzustellenden Mischung und den zu verwendenden Thermoplasten kompatibel ist, um beim Transport eine Auflösung der Ballen oder Briketts zu verhindern. Dabei wird davon ausgegangen, dass die Herstellung der Presskörper dort erfolgt, wo die Späne erzeugt werden, da ein Transport der unverdichteten Späne über längere Strecken unwirtschaftlich wäre.

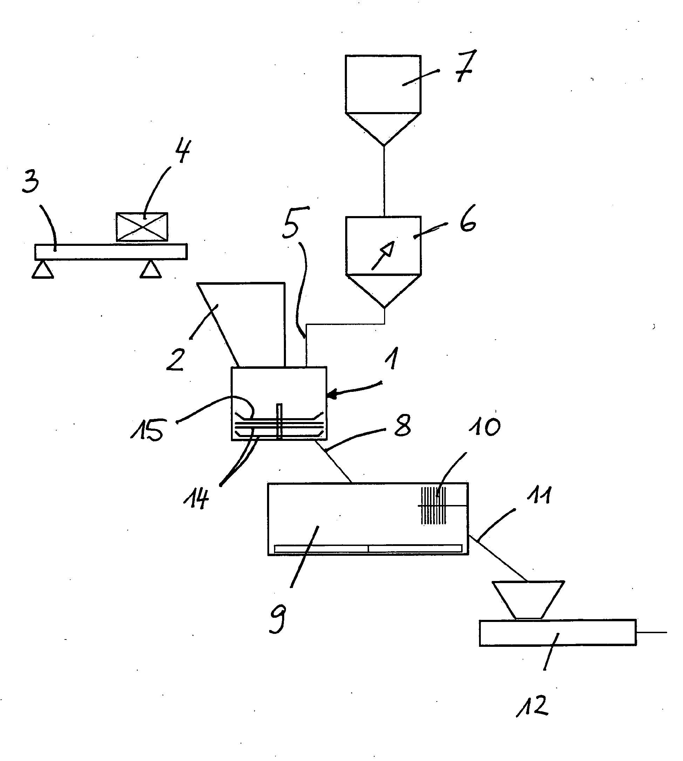

Das erfindungsgemäße Verfahren wird beispielsweise auf einer aus der Zeichnung ersichtlichen Anlage durchgeführt. Diese enthält als Hauptbestandteil einen Mischer 1, insbesondere einen Friktionsmischer, mit einem Einfüllschacht 2. Dieser ist einem Zuführband 3 mit Wiegeeinrichtung zugewandt, mit dem die schematisch angedeuteten Presskörper 4 zu- geführt und in den Einfüllschacht 2 geladen werden. Außerdem weist der Mischer 1 wenigstens einen Eingang 5 auf, der mit dem Ausgang einer Wiegeeinrichtung 6 verbunden ist, deren Eingang an den Ausgang wenigstens eines Vorratsbehälters 7 für ein Thermoplast oder eine Mischung aus zwei oder mehr Thermoplasten verbunden ist. Dadurch können dem Mischer 1 in Abhängigkeit von der Beschickung mit Presskörpern 4 vorgewählte Mengen an Thermoplast(en) zugeführt werden. Als Thermoplast eignet sich z. B. ein Polyethylen, Polypropylen oder Polyvinylchlorid.

Eine Austragsöffnung 8 des Mischers 1 ist im Ausführungsbeispiel mit dem Eingang eines Kühlmischers 9 verbunden, der vorzugsweise mit einer Zerkleinerungsvorrichtung 10 versehen ist und eine Ausgabeöffnung 11 aufweist, an der das fertige Gemisch aus Holzteilchen und Thermoplast zum Zwecke der Lagerung entnommen oder bei Bedarf direkt einer Verarbeitungsmaschine 12, z. B. einem Extruder, zugeführt werden kann.

Das erfindungsgemäße Verfahren beginnt im Falle der Zuführung von Presskörpern 4 in Form von Ballen zweckmäßig mit der dosierten Befüllung des Mischers 1 mit dem Thermoplast und ggf. weiteren Additiven. Dabei können sich nicht näher dargestellte Mischwerkzeuge 14 des Mischers noch im Stillstand oder auch bereits in Rotation befinden. Dagegen werden die Presskörper 4, wenn sie aus Ballen bestehen, vorzugsweise nur bei in Rotation befindlichen Mischwerkzeugen 14, d. h. bei laufendem Mischer 1 in diesen eingegeben. Hierdurch wird verhindert, dass die Ballen in einer Weise zwischen oder in die Mischwerkzeuge 14 gelangen, dass deren späteres Anfahren blockiert wird.

Die bei laufendem Mischer 1 zugeführten Presskörper 4 werden von den rotierenden Mischwerkzeugen 14 erfasst, aufgerissen und zerteilt. Eine etwa vorhandene, die Presskörper 4 umgebende Folie wird dabei aufgerissen und zerkleinert. Die verdichteten Holzspäne werden von den Mischwerkzeugen 14 zunächst vereinzelt und in ihren ursprünglichen Zustand zurückgebildet, aber zumindest teilweise auch zerkleinert und/oder in Fasern, Schuppen und zu einem kleinen Anteil in kleinere Partikel aufgeteilt. Zur Erfüllung dieses Zwecks hat es sich als vorteilhaft erwiesen, ein oberstes Mischwerkzeug 15 als sog. Horn auszubilden. Außerdem werden die in Drehrichtung vorn liegenden Kanten der Mischwerkzeuge zweckmäßig mit einer Rundung versehen und hart ausgebildet oder gehärtet. Dadurch wird erreicht, dass die Holzspäne zwar vereinzelt und in Schuppen, Fasern und dgl. zerteilt, aber nicht wie bei der Anwendung von Mühlen mit Schneid- oder Mahlwerkzeugen in kleinste Partikel zerschnitten und zerkleinert werden.

Zur schnellen Auflösung einer die Presskörper 4 umgebenden Folie kann es zweckmäßig sein, das Horn 15 an einer vorlaufenden Kante scharfkantig auszubilden oder mit einer Zahnung zu versehen. Im übrigen ist die Folie insoweit "kompatibel", dass sie aus einem Thermoplast besteht, das bei den erreichten Temperaturen plastifiziert wird, daher gleichfalls zur Beschichtung der Holzteilchen verwendet werden kann und die Eigenschaften des Endprodukts nicht beeinträchtigt.

Im Falle der Anwendung von Presskörpern 4 in Form von Briketts wird zweckmäßig auf dieselbe Weise, wie oben beschrieben ist, vorgegangen. Wenn hier keine umhüllende Folie vorhanden ist, braucht auf deren Auflösung keine Rücksicht genommen werden.

Dasselbe gilt bei der Beschickung des Mischers 1 mit Presskörpern 4 in Form von Pellets. Da diese eine vergleichsweise geringe Größe besitzen, besteht hier auch die Möglichkeit, die Zuführung der Pellets bei stehendem Mischer 1 vorzunehmen. Eine derartige Beschickung kann je nach Größe und Gewicht der Presskörper 4 und der Abmessungen der Mischwerkzeuge 14, 15 unter Umständen auch bei der Anwendung von Presskörpern 4 in Form von Briketts vorgesehen werden.

Ein wesentlicher Vorteil des erfindungsgemäßen Verfahrens besteht darin, dass ein aktives Heizen des Mischers 1 mittels einer Heizflüssigkeit oder eines Heizmantels nicht erforderlich ist. Die mechanisch eingebrachte Energie, die erforderlich ist, um die Presskörper 4 zu öffnen und die Späne zu vereinzeln, führt bereits zu Temperaturen der Mischung von 200 °C und mehr. Bei diesen Temperaturen werden übliche Thermoplaste wie Polyethylen oder Polypropylen ausreichend plastifiziert, um die gewünschte Beschichtung bzw. Umhüllung der Holzteilchen zu bewirken. Dadurch werden erhebliche Kosten für zusätzliche Heizvorrichtungen und deren Betrieb eingespart. Vorteilhaft ist ferner, dass dem Mischer zur Herstellung einer kompletten Charge auch zwei oder mehr Ballen nacheinander zugeführt werden können, die im Mischer einzeln nacheinander aufgelöst werden. Bei Versuchen der Anmelderin wurden gute Ergebnisse mit einem Mischer 1 erzielt, der einen Durchmesser von ca. 100 cm hatte und dessen Mischwerkzeuge 12, 14 mit einer Drehzahl von ca. 1000 UpM entsprechend einer Umfangsgeschwindigkeit von ca. 45 m/s angetrieben wurden.

Wie die obige Beschreibung zeigt, ermöglicht das erfindungsgemäße Verfahren mit einfachen Mitteln die Anwendung großer, voluminöser Späne ohne vorhergehende Mahlung und unter weitgehender Erhaltung ihrer flächigen Struktur.

Nach Beendigung des Mischvorgangs und der Beschichtung der Holzteilchen wird die erhaltene Mischung abgekühlt. Hierzu wird zweckmäßig der aus der Zeichnung ersichtliche Kühlmischer 9 verwendet. In diesem wird das Gemisch schnell abgekühlt und dadurch verhindert, dass sich zu dicke Klumpen (Agglomerate) bilden, die die Lagerfähigkeit und weitere Bearbeitung im Extruder 12 od. dgl. behindern könnten. Außerdem kann mit Hilfe der Rezeptur des Gemischs, des Mengenverhältnisses Holz/Thermoplast und anderer Prozessparameter ein zu starkes Verkleben der Teilchen im Mischer 1 und/oder im Kühlmischer 9 verhindert werden. Die vorzugsweise im Kühlmischer 9 vorhandene Zerkleinerungsvorrichtung 10 kann in vorteilhafter Weise dazu dienen, grobe Agglomerate wieder zu zerkleinern, ohne die kleineren Agglomerate noch weiter zu zerschneiden. Vorzugsweise wird dieser Vorgang so gesteuert, dass die an der Ausgabeöffnung 11 entnommenen Partikel Abmessungen von höchstens 10 mm aufweisen.

Im Gegensatz zu Mischungen der beschriebenen Art, die aus feinem Sägemehl od. dgl. hergestellt werden, weist die mit dem erfindungsgemäßen Verfahren hergestellte Mischung überwiegend größere Partikel in Form von aus den Spänen separierten Fasern oder Schuppen und nur in einem geringen Umfang kleinste Partikel auf. Besonders bevorzugt werden Mischungen hergestellt, bei denen die Fasern bei einer Dicke von 0,05 mm bis 0,5 mm ein Verhältnis Breite zu Dicke von 1 : 1 bis 10 : 1 und ein Verhältnis Länge zu Breite von mehr als 10 : 1 und/oder die Schuppen bei einer Dicke von ebenfalls 0,05 mm bis 0,5 mm ein Verhältnis Breite zu Dicke von 10 : 1 und mehr und besonders bevorzugt von 20 : 1 und mehr bei einem Verhältnis Länge zu Breite von 10 : 1 und weniger aufweisen.

Der Anteil an Thermoplasten in der fertigen Mischung beträgt wie bei bekannten Gemischen der hier interessierenden Art beispielsweise 5 Gew. % bis 50 Gew.%.

Die Erfindung ist nicht auf das beschriebene Ausführungsbeispiel beschränkt, das auf vielfache Weise abgewandelt werden kann. Das gilt insbesondere für die beschriebenen Gewichts- und Größenverhältnisse der verschiedenen Bestandteile, da die obigen Angaben nur als Ausführungsbeispiele aufzufassen sind. Auch die Wahl der Misch- und/oder Zerkleinerungswerkzeuge ist in Abhängigkeit vom Einzelfall zu treffen und wie die übrigen Prozessparameter ggf. durch Versuche zu ermitteln. Außerdem ist klar, dass die Thermoplaste und die für sie zweckmäßigen Prozessparameter analog zu denen gewählt werden können, die aus den eingangs erwähnten Dokumenten bekannt sind. Schließlich versteht sich, dass die verschiedenen Merkmale auch in anderen als den beschriebenen und dargestellten Kombinationen angewendet werden können.

## Patentansprüche

1. Verfahren zur Herstellung von mit wenigstens einem Thermoplast umhüllten Holzteilchen durch Vermischen der Holzteilchen und des Thermoplasts in einem Mischer (1) unter gleichzeitiger Plastifizierung des Thermoplasts und Umhüllung der Holzteilchen mit dem Thermoplast sowie durch nachfolgendes Abkühlen der erhaltenen Mischung und ggf. Zerkleinern von bei der Umhüllung gebildeten Agglomeraten, **dadurch gekennzeichnet, dass** dem Mischer (1) als Holzteilchen aus Holzspänen hergestellte Presskörper (4) zugeführt und die Presskörper (4) während des Mischvorgangs unter Zurückbildung und Zerkleinerung der Späne wieder aufgelöst werden.

2. Verfahren nach Anspruch 1, **dadurch gekennzeichnet, dass** dem Mischer (1) mit einer Folie ummantelte Presskörper (4) zugeführt werden.

3. Verfahren nach Anspruch 1 oder 2, **dadurch gekennzeichnet, dass** dem Mischer (1) Presskörper (4) in Form von Ballen mit Dichten von 0,20 kg/l bis 0,40 kg/l sowie Briketts oder Pellets mit Dichten von 0,80 kg/l bis 1,2 kg/l zugeführt werden.

4. Verfahren nach Anspruch 3, **dadurch gekennzeichnet, dass** die Zuführung von Ballen und/oder Briketts nur bei laufendem Mischer (1) erfolgt.

5. Verfahren nach einem der Ansprüche 1 bis 4, **dadurch gekennzeichnet, dass** als Ausgangsmaterial für die Holzteilchen Späne mit Dicken von 0,05 mm bis 0,3 mm, Breiten von 5 mm bis 20 mm und Längen von 5 mm bis 50 mm verwendet werden.

6. Verfahren nach Anspruch 5, **dadurch gekennzeichnet, dass** die Späne im Mischer (1) überwiegend zu Fasern und Schuppen zerkleinert werden.

7. Verfahren nach einem der Ansprüche 1 bis 6, **dadurch gekennzeichnet, dass** als Mischer (1) ein Friktionsmischer verwendet und die Plastifizierung des Thermoplasts ausschließlich mittels der beim Mischvorgang erzeugten Reibungswärme vorgenommen wird.

8. Verfahren nach einem der Ansprüche 2 bis 7, **dadurch gekennzeichnet, dass** zur schnelleren Auflösung der die Presskörper (4) umgebenden Folien wenigstens ein Mischwerkzeug (15) mit scharfen Kanten oder Zahnungen versehen wird.

9. Verfahren nach einem der Ansprüche 1 bis 8, **dadurch gekennzeichnet, dass** die Abkühlung der Mischung in einem mit einer Austragsöffnung (8) des Mischers (1) verbundenen Kühlmischer (9) erfolgt.

10. Verfahren nach einem der Ansprüche 6 bis 9, **dadurch gekennzeichnet, dass** die Betriebsbedingungen beim Mischen so gewählt werden, dass die Fasern bei einer Dicke von 0,05 mm bis 0,5 mm ein Verhältnis Breite zu Dicke von 1 : 1 bis 10 : 1 und ein Verhältnis Länge zu Breite von mehr als 10 : 1 erhalten.

11. Verfahren nach einem der Ansprüche 6 bis 10, **dadurch gekennzeichnet, dass** die Betriebsbedingungen beim Mischen so gewählt werden, dass die Schuppen bei einer Dicke von 0,05 mm bis 0,5 mm ein Verhältnis Breite zu Dicke von mehr als 10 : 1, vorzugsweise mehr als 20 : 1, und ein Verhältnis Länge zu Breite von weniger als 10 : 1 aufweisen.

12. Mischung aus Holzteilchen, die mit wenigstens einem Theromplast umhüllt sind, **dadurch gekennzeichnet, dass** die Holzteilchen überwiegend als aus Holzspänen separierte Fasern und Schuppen vorliegen.

13. Mischung nach Anspruch 12, **dadurch gekennzeichnet, dass** die Fasern bei einer Dicke von 0,05 mm bis 0,5 mm ein Verhältnis Breite zu Dicke von 1 : 1 bis 10 : 1 und ein Verhältnis Länge zu Breite von mehr als 10 : 1 aufweisen.

14. Mischung nach Anspruch 12 oder 13, **dadurch gekennzeichnet, dass** die Schuppen bei einer Dicke von 0,05 mm bis 0,5 mm ein Verhältnis Breite zu Dicke von mehr als 10 : 1, vorzugsweise mehr als 20 : 1, und ein Verhältnis Länge zu Breite von weniger als 10 : 1 aufweisen.

15. Mischung nach einem der Ansprüche 12 bis 14, **dadurch gekennzeichnet, dass** der Thermoplastanteil 5 Gew. % bis 50 Gew. % beträgt.
